# FASCICULE DE BREVET EUROPEEN

(11) **EP 3 808 638 B1**
(45) Date de publication et mention de la délivrance du brevet: **16.08.2023**
(21) Numéro de dépôt: 20200028.7
(22) Date de dépôt: 05.10.2020
(51) Int. Cl.: B62D 43/10

(54) **VÉHICULE AUTOMOBILE COMPRENANT UN DISPOSITIF INTÉRIEUR DE MAINTIEN D'UNE ROUE DE SECOURS**
KRAFTFAHRZEUG, DAS EINE INTERNE VORRICHTUNG ZUM BEFESTIGEN EINES ERSATZREIFENS UMFASST
MOTOR VEHICLE COMPRISING AN INTERIOR DEVICE FOR HOLDING A SPARE WHEEL

(30) Priorité: 17.10.2019 FR 1911607
(43) Date de publication de la demande: 21.04.2021
(73) Titulaire: Renault s.a.s, 92100 Boulogne Billancourt (FR)
(72) Inventeur: BOUAL, FRANCOIS, 78280 GUYANCOURT (FR); DESCHAMPS, JEAN-JACQUES, 78370 PLAISIR (FR); LHOTTE, JULIEN, 78910 Béhoust (FR); MARTIN, STEPHANE, 78610 Auffargis (FR); SILVA, BRUNO, CURITIBA (BR)
(74) Mandataire: Renault Group

(56) Documents cités:
- CN-A- 110 254 536
- FR-A1- 2 613 683
- FR-A1- 2 863 245

## Description

L'invention concerne le domaine des véhicules automobiles. Elle concerne plus particulièrement un dispositif de maintien d'une roue de secours implanté à l'intérieur d'un véhicule automobile, et en particulier dans le coffre d'un véhicule.

On connaît divers dispositifs pour retenir une roue de secours au niveau du coffre de rangement à l'arrière d'un véhicule automobile tels ceux divulgués par FR2863245 A1, FR2613683 A1 et CN 110254536. Le FR2863245A1 divulgue notamment un véhicule comprenant un dispositif de maintien d'une roue de secours selon le préambule de la revendication 1.

Plus spécifiquement dans le cas où la roue de secours est retenue à l'intérieur du coffre, il est connu de disposer la roue de secours dans un logement en fond de coffre pour y disposer à plat ladite roue, et de retenir ladite roue à la paroi par un système utilisant un moyen de fixation central tel qu'une vis passant au centre évidé de la jante de la roue qui forme le trou de passage pour le moyeu, pour se visser à travers un pontet solidarisé à la caisse. Pour utiliser la roue de secours, il suffit de dévisser ladite vis et de retirer ladite roue.

Toutefois il est nécessaire que la roue de secours soit maintenue efficacement dans le coffre, y compris en cas de choc ou de retournement du véhicule, la roue de secours ne devant pas passer dans l'habitacle.

Un tel système avec une fixation centrale peut s'avérer insuffisant pour garantir le niveau de sécurité requis.

En outre, dans le cas fréquent pour les véhicules électriques ou hybrides, une batterie de traction est logée au niveau du coffre en sous caisse et des éléments du système électrique reliés à la batterie sont dans le coffre, comme par exemple le disjoncteur de batterie (appelé SD switch). Ceci crée des déformations en zone plancher qui rendent difficile de retenir la roue de secours avec un système à fixation centrale. De plus on risque d'endommager le système électrique de la batterie en cas de libération intempestive de la roue de secours.

L'invention vise à proposer un nouveau dispositif de maintien d'une roue de secours à l'intérieur d'un véhicule automobile, notamment dans un coffre de véhicule, qui retienne efficacement ladite roue même en cas de retournement du véhicule.

A cet effet l'invention propose un véhicule automobile comprenant un dispositif de maintien d'une roue de secours implanté à l'intérieur du véhicule qui se caractérise en ce que ledit dispositif comprend une structure filaire formée par un fil cintré s'appliquant sur la roue de secours reposant à plat, au moins une charnière solidaire d'un élément structurel du véhicule et des moyens de verrouillage aptes à se solidariser à au moins un élément structurel du véhicule, ladite au moins une charnière et lesdits moyens de verrouillage étant espacés les uns des autres, et au moins une portion dudit fil étant intégrée à ladite au moins une charnière apte à faire passer réversiblement ladite structure filaire d'une position abaissée à une position relevée, et ledit fil cintré comprenant un élément de fermeture coopérant avec lesdits moyens de verrouillage.

Selon l'invention, ledit fil cintré est en métal et ladite au moins une charnière est en cylindre creux métallique soudé à un élément structurel du véhicule, une bague en matière polymère étant montée glissante dans ledit cylindre. Une extrémité du fil est introduite dans ladite bague.

En particulier, cette extrémité de fil est une portion de fil pliée.

Selon un mode de réalisation préféré de l'invention, ledit dispositif comprend deux charnières et chaque extrémité dudit fil est intégrée respectivement à une dite charnière.

Le dispositif selon l'invention comprend ainsi au moins deux points d'accroche à un élément structurel du véhicule espacés l'un de l'autre, de préférence au moins trois points d'accroche espacés, de sorte que ladite structure filaire retient efficacement la roue de secours.

Selon un mode de réalisation préféré de l'invention, ledit fil cintré est configuré suivant une forme adaptée pour s'appliquer sur la partie pneumatique de la roue de secours à maintenir, en particulier ledit fil cintré présente une forme globale de parallélogramme ayant quatre à six côtés.

Selon un mode de réalisation particulier de l'invention, ledit élément de fermeture que comporte ledit fil cintré est une boucle formée par une portion dudit fil, orientée perpendiculairement au plan moyen défini par ledit fil cintré, et orientée vers le bas quand la structure filaire est en position abaissée. En particulier ladite boucle est au moins partiellement ouverte.

Avantageusement selon l'invention, lesdits moyens de verrouillage coopérant avec ledit élément de fermeture comprennent une vis de verrouillage maintenue à ladite structure filaire par une plaque solidaire en sa face supérieure audit élément de fermeture et une rondelle disposée sous la face inférieure de la dite plaque et enserrant ladite vis, et ladite vis se fixant à un élément structurel du véhicule à travers un pontet de verrouillage fixé audit élément structurel. Cette configuration maintient la vis de fixation audit élément de fermeture et par conséquent au fil, pour éviter de perdre ladite vis.

De préférence selon l'invention, ledit dispositif comprend au moins une patte de retenue apte à retenir ladite structure filaire en position relevée, ladite au moins une patte étant fixée à proximité de ladite au moins une charnière.

Plus particulièrement, ledit dispositif de maintien de la roue de secours est implanté à l'intérieur du coffre (de rangement) du véhicule.

De préférence selon l'invention, ledit élément structurel du véhicule auquel se solidarisent ladite au moins une charnière et lesdits moyens de verrouillage, est la partie de caisse du véhicule formant la paroi de fond du véhicule, en particulier la paroi de fond du coffre du véhicule.

En particulier selon l'invention, ledit véhicule comprend au moins une batterie de traction et ledit coffre comprend en outre des éléments d'un système électrique relié à ladite au moins une batterie de traction.

D'autres particularités et avantages de l'invention ressortiront à la lecture de la description faite ci-après d'un mode de réalisation particulier de l'invention, donné à titre indicatif mais non limitatif, en référence aux dessins annexés pour lesquels
[Fig. 1] illustre, selon une vue partielle en perspective de dessus et latérale, un dispositif de maintien de roue de secours selon l'invention, implanté dans un coffre de véhicule automobile;
[Fig. 2] est un vue de détails en perspective des moyens de verrouillage coopérant avec un élément de fermeture du dispositif représenté en figure 1 ;
[Fig. 3] est un vue de détails en perspective d'un moyen de retenue de la structure du dispositif représenté en figure 1.

Les orientations exprimées dans la description des figures pour le coffre de véhicule automobile dans lequel est installé un dispositif de maintien de roue de secours et pour le dispositif lui-même sont données en référence à un repère XYZ classique du véhicule dans lequel X représente la direction longitudinale avant-arrière du véhicule, orientée vers l'arrière, Y la direction transversale du véhicule, orientée vers la droite, et Z la direction verticale orientée vers le haut du véhicule.

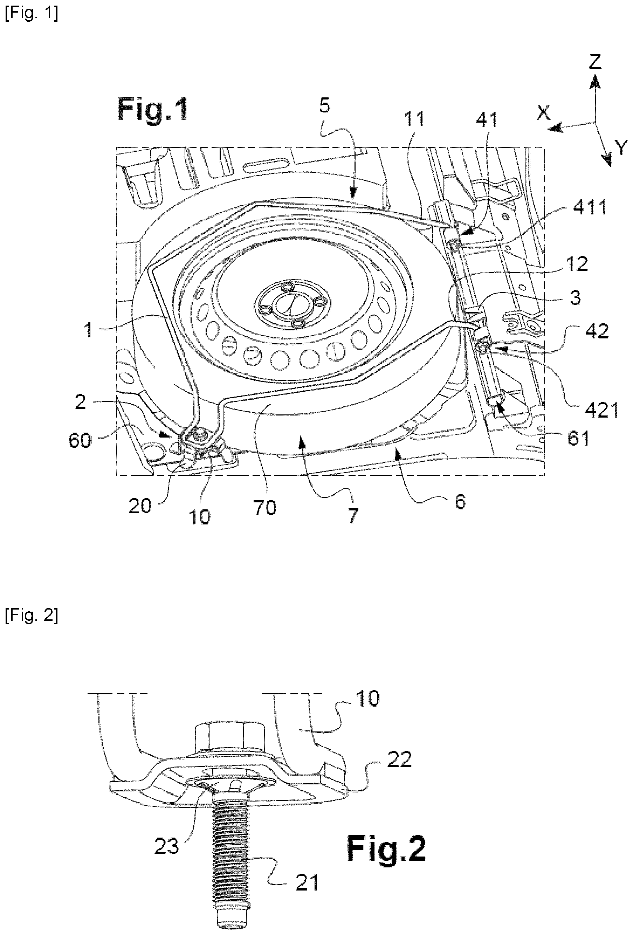

La figure 1 illustre selon une vue partielle en perspective de dessus et latérale un dispositif de maintien de roue de secours dans un coffre de véhicule automobile selon l'invention. Un évidement 5 est formé en fond de coffre, c'est-à-dire dans la partie plancher du coffre, pour y loger une roue de secours 7 reposant à plat sur la partie de caisse formant la paroi de fond structurelle du véhicule 6, et plus particulièrement sur la paroi de fond structurelle du coffre 60. Le dispositif de maintien de roue de secours comporte une structure filaire 1, constituée par un fil cintré dont chaque extrémité 11, 12 est respectivement solidaire d'une charnière 41, 42 solidarisée à la paroi de caisse 6 du véhicule. En outre, ledit fil présente une portion en boucle qui constitue l'élément de fermeture 10 coopérant avec des moyens de verrouillage 2 se verrouillant réversiblement dans la paroi de caisse 6, et plus particulièrement la paroi de fond de coffre 60.

Lesdites charnières 41, 42 sont ainsi solidaires d'un élément structurel dans le coffre. Selon l'exemple, les deux charnières sont réalisées en fixant par soudage deux cylindres creux métalliques (1 cylindre par charnière) à un élément structurel du véhicule tel qu'une barre métallique de protection 61, elle-même solidaire de la partie de caisse formant la paroi de fond du véhicule 6 , et plus particulièrement de la paroi de fond structurelle du coffre 60. Selon l'exemple la barre est une barre structurelle protégeant usuellement les sièges arrière d'une projection accidentelle d'un objet dans le coffre. Dans chacun de ces cylindres, est insérée une bague épaulée, en matière polymère 411, 421, par exemple en POM (PolyOxyMéthylène), montée glissante. Symétriquement, pour chaque charnière, une extrémité coudée du fil est enfilée dans ladite bague contenue dans le cylindre respectif. Cette bague, en polymère de la famille des polyacétals, permet d'éviter le contact métal/métal entre le fil et le cylindre qui pourrait générer du bruit. Le maintien en position de l'ensemble est garanti par deux rondelles déformables.

Ledit fil cintré 1 a une forme globalement d'un U présentant quelques angles pour l'adapter à la taille de la roue de secours et créer des points d'appui de sorte que ledit fil soit bien en appui sur le pneumatique de la roue de secours. Par exemple la forme en U est grossièrement celle d'un parallélogramme, selon l'exemple à cinq côtés. La boucle de fermeture 10 est orientée sensiblement perpendiculairement au plan moyen de la partie filaire qui vient en appui sur la partie pneumatique 70 de la roue de secours, et aussi vers le bas, en direction de la paroi de fond 60 du coffre.

Une vis de verrouillage 21 permet de verrouiller la structure filaire, en position abaissée, par sa boucle de fermeture 10, la vis passant dans ladite boucle et se vissant dans la paroi de caisse 60 en fond de coffre. Une partie des moyens de verrouillage est conçue avantageusement pour retenir la vis à la structure filaire même déverrouillée, comme explicité plus loin en description de la figure 2.

Ladite structure filaire 1 est ainsi maintenue sur la roue de secours en trois points d'accroche à la caisse que constituent les deux points de d'accroche dans les charnières solidaires de la caisse et le point de verrouillage à la caisse, au lieu d'un seul sur les solutions traditionnelles de fixation centrale en zone intérieure de coffre. La structure filaire vient en contact avec la partie pneumatique 70 de la roue de secours, et lors du serrage de la vis de verrouillage 21 au niveau du pontet de verrouillage 20 le fil comprime le pneumatique 70 mettant ce dernier en contrainte. Cette mise en contrainte permet de plaquer et donc de maintenir en position la roue de secours. La structure filaire présente ainsi de meilleurs appuis sur la partie pneumatique de la roue de secours, ce qui permet une bonne répartition des efforts sur la structure de maintien de ladite roue, notamment en cas de chocs ou de retournement du véhicule. Ceci améliore donc la tenue de la roue de secours sur la caisse, diminuant ainsi fortement les risques de projection de cette dernière dans le coffre et donc dans l'habitacle.

La figure 2 est une vue de détail des moyens de verrouillage du dispositif, montrant, en perspective depuis le côté proche du pneumatique de la roue de secours, des éléments de verrouillage 21, 22, 23 solidaires de la boucle de fermeture 10. La vis 21, permettant le verrouillage du dispositif à la paroi de caisse 60, est maintenue sur la structure filaire 1, pour éviter de l'égarer lorsque la structure filaire est ouverte, c'est-à-dire en position relevée, la vis étant alors dévissée de la paroi de caisse. Pour cela, la vis de verrouillage 21 passe à travers une plaque 22, la tête de la vis pouvant venir en appui sur la face supérieure de la plaque, cette face étant en outre soudée à la portion de fil formant ladite boucle de fermeture 10. Par ailleurs une rondelle déformable 23 disposée sous ladite plaque 22 et enserrant la vis 21, permet de retenir la vis 21 dans la plaque 22. De plus cette rondelle déformable 23 permet de garantir la bonne tenue de l'ensemble avec le pontet de verrouillage 20 soudé à la paroi de fond 60 lors du verrouillage de la structure filaire.

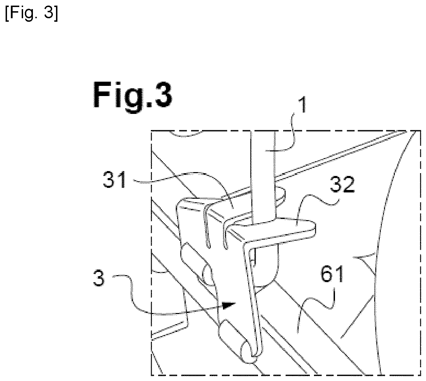

En outre, avantageusement, ledit dispositif comprend des moyens de retenue 3 de la structure filaire 1 en position relevée, aptes à maintenir ladite structure filaire en position ouverte afin de libérer les mains d'un opérateur et permettre ainsi le maniement de la roue de secours avec les deux mains. Selon l'exemple, et comme illustré par le détail en figure 3, lesdits moyens de retenue 3 se présentent sous forme d'au moins une patte de retenue fixée à une barre structurelle 61 et à proximité d'une charnière 42. Ladite patte a une forme de griffe. Elle comprend deux branches 31, 32 orientées dans un plan sensiblement horizontal, écartées l'une de l'autre, entre lesquelles peut être enfoncé à force le fil passant en position relevée, soit sensiblement à la verticale (Z), par coincement dudit fil en une zone proche de l'extrémité insérée dans la charnière. Ladite patte est par exemple en tôle, soudée à ladite barre structurelle en métal 61.

En pratique, une garniture, par exemple une moquette, non représentée sur les figures, vient recouvrir ledit dispositif de maintien de la roue de secours, en particulier la structure filaire. Cette garniture comprend une découpe pour que la partie recouvrant le dispositif soit relevable et/ou amovible au moins au niveau de la structure filaire. Lorsque l'on souhaite accéder à ladite roue de secours, la partie amovible est enlevée, ou relevée avec la structure filaire sur laquelle elle repose.

L'invention a atteint ses objectifs. La structure filaire du dispositif de maintien de la roue de secours peut résister à d'importantes sollicitations. Cela permet de garantir que la roue de secours reste solidaire d'un élément structurel du véhicule, même en condition de chocs ou d'accidents, notamment en cas de retournement. De plus, ladite invention présente l'avantage d'être économique.

L'invention est particulièrement bien adaptée aux véhicules électriques ou hybrides pour lesquels des éléments du système électrique sont implantés dans le coffre contenant aussi la roue de secours.

## Revendications

1. Véhicule automobile comprenant un dispositif de maintien d'une roue de secours (7) implanté à l'intérieur dudit véhicule, ledit dispositif comprenant une structure filaire (1) formée par un fil cintré s'appliquant sur la roue de secours reposant à plat, au moins une charnière (41, 42) solidaire d'un élément structurel du véhicule (6, 60, 61) et des moyens de verrouillage (2) aptes à se solidariser à au moins un élément structurel du véhicule (6, 60), ladite au moins une charnière et lesdits moyens de verrouillage étant espacés les uns des autres, et au moins une portion dudit fil étant intégrée à ladite au moins une charnière ( 41, 42) apte à faire passer réversiblement ladite structure filaire d'une position abaissée à une position relevée, et ledit fil cintré comprenant un élément de fermeture (10) coopérant avec lesdits moyens de verrouillage (2), ledit fil étant en métal, **caractérisé en ce que** ladite au moins une charnière (41, 42) est un cylindre creux métallique soudé à un élément structurel du véhicule, une bague (411, 421) en matière polymère étant montée glissante dans ledit cylindre, et l'extrémité du fil étant introduite dans ladite bague.

2. Véhicule selon la revendication 1, **caractérisé en ce que** ledit dispositif comprend deux charnières (41, 42) et chaque extrémité dudit fil est intégrée respectivement à une dite charnière.

3. Véhicule selon l'une des revendications 1 à 2, **caractérisé en ce que** ledit fil cintré est configuré suivant une forme adaptée pour s'appliquer sur la partie pneumatique (70) de la roue de secours à maintenir, en particulier ledit fil cintré présente une forme globale de parallélogramme ayant quatre à six côtés.

4. Véhicule selon l'une des revendications 1 à 3, **caractérisé en ce que** ledit élément de fermeture (10) que comporte ledit fil cintré est une boucle formée par une portion dudit fil, orientée perpendiculairement au plan moyen défini par ledit fil cintré, et orientée vers le bas quand la structure filaire est en position abaissée.

5. Véhicule selon l'une des revendications 1 à 4, **caractérisé en ce que** lesdits moyens de verrouillage (2) coopérant avec ledit élément de fermeture (10) que comporte ledit fil comprennent une vis de verrouillage (21) maintenue à ladite structure filaire par une plaque (22) solidaire en sa face supérieure audit élément de fermeture et une rondelle (23) disposée sous la face inférieure de la dite plaque (22) et enserrant ladite vis, et ladite vis se fixant à un élément structurel du véhicule (6, 60) à travers un pontet de verrouillage (20) fixé à undit élément structurel (6, 60).

6. Véhicule selon l'une des revendications 1 à 5, **caractérisé en ce que** ledit dispositif comprend au moins une patte de retenue (3) apte à retenir ladite structure filaire en position relevée, ladite au moins une patte de retenue étant fixée à proximité de ladite au moins une charnière (42).

7. Véhicule selon l'une des revendications 1 à 6, **caractérisé en ce que** ledit dispositif de maintien de la roue de secours est implanté à l'intérieur du coffre du véhicule.

8. Véhicule selon l'une des revendications 1 à 7, **caractérisé en ce que** ledit élément structurel du véhicule auquel se solidarisent ladite au moins une charnière (41, 42) et lesdits moyens de verrouillage (2), est la partie de caisse du véhicule formant la paroi de fond du véhicule (6).

9. Véhicule selon la revendication 7 ou les revendications 7 et 8, **caractérisé en ce qu'**il comprend au moins une batterie de traction et que ledit coffre comprend en outre des éléments d'un système électrique relié à ladite au moins une batterie de traction.

## Patentansprüche

1. Kraftfahrzeug, welches eine Vorrichtung zum Halten eines Ersatzrades (7) umfasst, die im Inneren des Fahrzeugs eingebaut ist, wobei die Vorrichtung eine von einem gebogenen Draht gebildete Drahtstruktur (1), die auf das flach liegende Ersatzrad gedrückt wird, mindestens ein mit einem Strukturelement (6, 60, 61) des Fahrzeugs fest verbundenes Scharnier (41, 42) und Verriegelungsmittel (2), die geeignet sind, mit mindestens einem Strukturelement (6, 60) des Fahrzeugs fest verbunden zu werden, umfasst, wobei das mindestens eine Scharnier und die Verriegelungsmittel voneinander beabstandet sind und mindestens ein Abschnitt des Drahtes in das mindestens eine Scharnier (41, 42) integriert ist, das geeignet ist, die Drahtstruktur umkehrbar aus einer abgesenkten Position in eine angehobene Position zu bewegen, und wobei der gebogene Draht ein Schließelement (10) umfasst, das mit den Verriegelungsmitteln (2) zusammenwirkt, wobei der Draht aus Metall besteht, **dadurch gekennzeichnet, dass** das mindestens eine Scharnier (41, 42) ein metallischer Hohlzylinder ist, der an ein Strukturelement des Fahrzeugs angeschweißt ist, wobei ein Ring (411, 412) aus Polymermaterial in dem Zylinder verschiebbar angebracht ist und das Ende des Drahtes in den Ring eingeführt ist.

2. Fahrzeug nach Anspruch 1, **dadurch gekennzeichnet, dass** die Vorrichtung zwei Scharniere (41, 42) umfasst und jedes Ende des Drahtes jeweils in ein Scharnier integriert ist.

3. Fahrzeug nach einem der Ansprüche 1 bis 2, **dadurch gekennzeichnet, dass** der gebogene Draht in einer Form ausgebildet ist, die geeignet ist, auf den Reifenteil (70) des zu haltenden Ersatzrades zu drücken, wobei insbesondere der gebogene Draht im Wesentlichen eine Parallelogrammform mit vier bis sechs Seiten aufweist.

4. Fahrzeug nach einem der Ansprüche 1 bis 3, **dadurch gekennzeichnet, dass** das Schließelement (10), welches der gebogene Draht aufweist, eine von einem Abschnitt des Drahtes gebildete Schleife ist, die senkrecht zu der durch den gebogenen Draht definierten Mittelebene ausgerichtet ist und die nach unten gerichtet ist, wenn sich die Drahtstruktur in der abgesenkten Position befindet.

5. Fahrzeug nach einem der Ansprüche 1 bis 4, **dadurch gekennzeichnet, dass** die Verriegelungsmittel (2), die mit dem Schließelement (10) zusammenwirken, welches der gebogene Draht aufweist, eine Verriegelungsschraube (21), die an der Drahtstruktur durch eine Platte (22) gehalten wird, die an ihrer Oberseite mit dem Schließelement fest verbunden ist, und eine Unterlegscheibe (23), die unter der Unterseite der Platte (22) angeordnet ist und die Schraube umschließt, umfassen, und wobei die Schraube an einem Strukturelement (6, 60) des Fahrzeugs über einen Verriegelungssteg (20) befestigt ist, der an dem Strukturelement (6, 60) befestigt ist.

6. Fahrzeug nach einem der Ansprüche 1 bis 5, **dadurch gekennzeichnet, dass** die Vorrichtung mindestens eine Haltelasche (3) umfasst, die geeignet ist, die Drahtstruktur in der angehobenen Position zuhalten, wobei die mindestens eine Haltelasche in der Nähe des mindestens einen Scharniers (42) befestigt ist.

7. Fahrzeug einem der Ansprüche 1 bis 6, **dadurch gekennzeichnet, dass** die Vorrichtung zum Halten des Ersatzrades im Inneren des Kofferraumes des Fahrzeugs eingebaut ist.

8. Fahrzeug einem der Ansprüche 1 bis 7, **dadurch gekennzeichnet, dass** das Strukturelement des Fahrzeugs, mit dem das mindestens eine Scharnier (41, 42) und die Verriegelungsmittel (2) fest verbunden sind, der Karosserieteil des Fahrzeugs ist, der die Bodenwand (6) des Fahrzeugs bildet.

9. Fahrzeug nach Anspruch 7 oder nach den Ansprüchen 7 und 8, **dadurch gekennzeichnet, dass** es mindestens eine Traktionsbatterie umfasst und dass der Kofferraum außerdem Elemente einer elektrischen Anlage umfasst, die mit der mindestens einen Traktionsbatterie verbunden ist.

## Claims

1. Motor vehicle comprising a device for holding a spare wheel (7) that is installed inside said vehicle, said device comprising a wire structure (1) formed by a bent wire pressing on the spare wheel resting flat, at least one hinge (41, 42) secured to a structural element of the vehicle (6, 60, 61) and locking means (2) that are able to be secured to at least one structural element of the vehicle (6, 60), said at least one hinge and said locking means being spaced apart from one another, and at least a portion of said wire being integrated into said at least one hinge (41, 42) that is able to make said wire structure pass reversibly from a lowered position to a raised position, and said bent wire comprising a closure element (10) cooperating with said locking means (2), said wire being made of metal, **characterized in that** said at least one hinge (41, 42) is a hollow metal cylinder welded to a structural element of the vehicle, a ring (411, 421) made of polymer material being mounted so as to be able to slide in said cylinder, and the end of the wire being introduced into said ring.

2. Vehicle according to Claim 1, **characterized in that** said device comprises two hinges (41, 42) and each end of said wire is integrated respectively into one said hinge.

3. Vehicle according to either of Claims 1 and 2, **characterized in that** said bent wire is configured according to a shape designed to press on the pneumatic part (70) of the spare wheel to be held, in particular said bent wire has the overall shape of a parallelogram having four to six sides.

4. Vehicle according to one of Claims 1 to 3, **characterized in that** said closure element (10) that said bent wire has is a loop formed by a portion of said wire, oriented perpendicular to the mean plane defined by said bent wire, and oriented downwards when the wire structure is in the lowered position.

5. Vehicle according to one of Claims 1 to 4, **characterized in that** said locking means (2) cooperating with said closure element (10) that said wire has comprise a locking screw (21) held on said wire structure by a plate (22) secured at its upper face to said closure element and a washer (23) disposed beneath the lower face of said plate (22) and gripping said screw, and said screw being fastened to a structural element of the vehicle (6, 60) through a locking bridge (20) fastened to one said structural element (6, 60).

6. Vehicle according to one of Claims 1 to 5, **characterized in that** said device comprises at least one retaining tab (3) that is able to retain said wire structure in the raised position, said at least one retaining tab being fastened near said at least one hinge (42) .

7. Vehicle according to one of Claims 1 to 6, **characterized in that** said device for holding the spare wheel is installed inside the boot of the vehicle.

8. Vehicle according to one of Claims 1 to 7, **characterized in that** said structural element of the vehicle to which said at least one hinge (41, 42) and said locking means (2) are secured, is the body part of the vehicle that forms the bottom wall of the vehicle (6) .

9. Vehicle according to Claim 7 or Claims 7 and 8, **characterized in that** it comprises at least one traction battery and **in that** said boot also comprises elements of an electrical system connected to said at least one traction battery.
